# EUROPÄISCHE PATENTSCHRIFT

(11) **EP 1 477 256 B1**
(45) Veröffentlichungstag und Bekanntmachung des Hinweises auf die Patenterteilung: **30.08.2006**
(21) Anmeldenummer: 04005781.2
(22) Anmeldetag: 11.03.2004
(51) Int. Cl.: B23F 23/12, B24B 53/075

(54) **Abrichtwerkzeug zum Abrichten einer Schleifschnecke**
Dressing tool for a grinding worm
Outil de dressage pour une vis sans fin de meulage

(30) Priorität: 16.05.2003 DE 10322181
(43) Veröffentlichungstag der Anmeldung: 17.11.2004
(73) Patentinhaber: THE GLEASON WORKS, Rochester, New York 14607-1282 (US)
(72) Erfinder: Schauer, Engelbert, 85716 Unterschleissheim (DE)
(74) Vertreter: Stahl, Gerhard F.W.

(56) Entgegenhaltungen:
- DE-A- 3 401 341
- DE-A- 19 910 746

## Beschreibung

Die Erfindung betrifft ein Abrichtwerkzeug zum Abrichten einer im wesentlichen zylindrischen Schleifschnecke, die auf einer Werkzeugspindel einer zum kontinuierlichen Wälzschleifen im Tangential- oder Diagonalverfahren geeigneten Maschine angeordnet ist.

Zylindrische Schleifschnecken werden zum kontinuierlichen Wälzschleifen von Zahnrädern eingesetzt. Da die Schleifschnecke bei diesem Vorgang einer natürlichen Abnutzung ausgesetzt ist, muß sie von Zeit zu Zeit abgerichtet werden. Beim Abrichtvorgang wird von den Flanken des oder der Gewindegänge der Schleifschnecke Material abgetragen, so daß der Kopfbereich des oder der Gewindegänge schmäler wird. Neben dem Werkzeug zum Profilieren der Schleifschnecke ist daher ein Werkzeug zum Anpassen des Kopfkreisdurchmessers der Schleifschnecke erforderlich. Der Kopfkreisdurchmesser wird so weit verringert, daß der Kopfbereich des oder der Gewindegänge der Schleifschnecke wieder die ursprünglich vorgesehene Breite aufweist. Die Einrichtung zum Abrichten der Schleifschnecke umfaßt somit zwei voneinander getrennte Werkzeuge. Das Werkzeug zum Profilieren der Flanken der Schleifschnecke kann beispielsweise eine Profilschleifscheibe sein. Das Abrichten der Schleifschnecke mit diesen beiden Werkzeugen erfolgt üblicherweise nicht an der Stelle der Maschine, an der später das Werkstück, d. h. das Zahnrad bearbeitet wird. Aus Genauigkeitsgründen ist es aber erwünscht, daß der Abrichtvorgang an der Stelle erfolgt, an der später die Schleifschnecke die Werkstücke bearbeitet. Es wurde daher bereits vorgeschlagen, (Deutsche Patentanmeldung 102 20 513.2) zum Profilieren der Flanken der Schleifschnecke ein im wesentlichen zylindrisches Zahnrad zu verwenden, das auf der beim Abrichten aktiven Oberfläche mit einem abrasiven Belag versehen ist und das an Stelle des Werkstückes auf der Werkstückspindel der Maschine aufgenommen ist. Da dieses Zahnrad lediglich zum Profilieren der Flanken der Schleifschnecke dient, ist eine zusätzliche Einrichtung zum Anpassen des Kopfkreisdurchmessers der Schleifschnecke erforderlich.

Aus der DE-A-199 10 746 ist ein gattungsgemässer Abrichtwerkzeug bekannt, welches eine Scheibe zum Abrichten der Flanken und einen konkavkonusförmigen Teil zum Abrichten des Kopfkreises der Schnecke aufweist.

Der Erfindung liegt die Aufgabe zugrunde, das gattungsgemäße Abrichtwerkzeug so auszubilden, daß das Ladekonzept vereinfacht und die Dauer der Bearbeitung der Schleifschnecke verkürzt wird.

Erfindungsgemäß wird diese Aufgabe mit einem Abrichtwerkzeug gelöst, das gekennzeichnet ist durch ein im wesentlichen zylindrisches Zahnrad, das auf der beim Abrichten aktiven Oberfläche mit einem abrasiven Belag versehen ist, zum Profilieren der Flanken der Schleifschnecke, und eine im wesentlichen zylindrische Rolle, die an der Umfangsfläche mit einem abrasiven Belag versehen ist, zum Anpassen des Kopfkreisdurchmessers der Schleifschnecke, wobei das Zahnrad und die Rolle mit der Werkstückspindel der Maschine axial- und drehfest verbindbar sind.

Die Tatsache, daß die beiden Teile des Abrichtwerkzeugs auf der Werkstückspindel aufgenommen werden können, vereinfacht das Ladekonzept. Eine weitere Zeitersparnis ergibt sich dadurch, daß das Abrichten der Flanken der Schleifschnecke und das Anpassen des Kopfkreisdurchmessers derselben in einem Arbeitszyklus erfolgen kann.

Das Zahnrad und die Rolle können so ausgebildet sein, daß sie unabhängig voneinander mit der Werkstückspindel axial- und drehfest verbunden werden können. Aus verschiedenen Gründen ist es aber vorteilhafter, daß das Zahnrad und die Rolle miteinander drehfest verbunden sind und als Werkzeugeinheit mit der Werkstückspindel axial- und drehfest verbindbar sind. Zu diesem Zweck könnten das Zahnrad und die Rolle einstückig ausgebildet sein. In diesem Fall muß allerdings das gesamte Werkzeug ausgewechselt werden, wenn das Zahnrad abgenutzt ist, obwohl die Rolle eine wesentliche größere Lebensdauer hat als das Zahnrad.

Die Ausbildung des Zahnrades und der Rolle als ein- oder zweiteilige Werkzeugeinheit ermöglicht auf vorteilhafte Weise eine Standardisierung des Abrichtwerkzeugs. Zum Abrichten unterschiedlicher Schleifschnecken genügt ein Satz von Abrichtwerkzeugen mit einheitlichem Innendurchmesser, die sich nur hinsichtlich des Außendurchmessers und der Verzahnungsgeometrie, wie der Modul, der Eingriffswinkel und der Schrägungswinkel des Zahnrades unterscheiden.

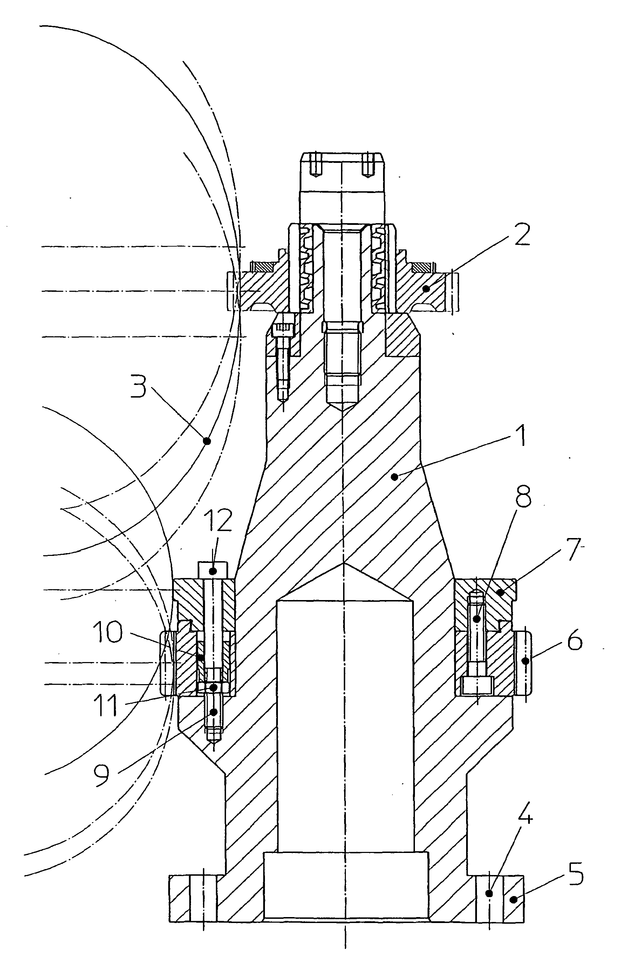

Die Erfindung wird nachfolgend anhand eines in der Zeichnung dargestellten Ausführungsbeispiels näher erläutert.

Die einzige Figur der Zeichnung zeigt im Längsschnitt eine Werkstückspindel einer Maschine zum kontinuierlichen Wälzschleifen von Zahnrädern im Tangentialoder Diagonalverfahren. Auf das in der Zeichnung obere freie Ende der Werkstückspindel 1 ist ein Zahnrad 2 gespannt, das mit einer durch eine elliptische Umrißlinie angedeuteten zylindrischen Schleifschnecke 3 feinbearbeitet wird. Die Schleifschnecke 3 ist auf einer (nicht gezeigten) Werkzeugspindel drehfest angeordnet. Da der Aufbau einer zum kontinuierlichen Wälzschleifen eingesetzten Maschine grundsätzlich bekannt ist, kann eine nähere Erläuterung der Maschine entfallen.

Der freie Endbereich der Werkstückspindel 1 geht über einen konischen Bereich in einen zylindrischen Bereich mit vergrößertem Durchmesser über, an den sich eine Ringschulter anschließt. Am anderen Ende weist die Werkstückspindel 1 einen mit Bohrungen 4 versehenen Ringflansch 5 zur Befestigung an einer Antriebswelle der Maschine auf. Ein Abrichtwerkzeug zum Abrichten der Schleifschnecke 3 besteht aus einem im wesentlichen zylindrischen Abrichtzahnrad 6 - nachfolgend einfach "Zahnrad" genannt - und aus einer im wesentlichen zylindrischen Abrichtrolle 7 - nachfolgend einfach "Rolle" genannt - , die in der nachfolgend beschriebenen Weise zu einer Werkzeugeinheit zusammengefaßt sind.

Das Zahnrad 6 ist auf seiner beim Abrichten aktiven Oberfläche, d. h. im Bereich der Zahnflanken mit einem abrasiven Belag versehen. In gleicher Weise ist die Rolle 7 an der Umfangsfläche mit einem abrasiven Belag versehen. Das Zahnrad 6 und die Abrichtrolle 7 haben den gleichen Innendurchmesser, der geringfügig größer ist als der Außendurchmesser des zylindrischen Bereichs der Werkstückspindel 1. Das Zahnrad 6 und die Rolle 7 sind zur gegenseitigen Zentrierung mit korrespondierenden ringförmigen Vorsprüngen bzw. Ausnehmungen versehen.

Wie in der linken Hälfte der Zeichnung gezeigt, sind das Zahnrad 6 und die Rolle 7 mit mehren, vorzugsweise drei, fluchtenden Bohrungen versehen, wobei die in dem Zahnrad ausgebildeten Bohrungen aus einem nachfolgend erläuterten Grund einen größeren Durchmesser haben. In der Ringschulter der Werkstückspindel 1 sind entsprechende Gewindebohrungen 9 angeordnet.

Bei der Montage des Abrichtwerkzeugs wird als erstes eine Spannschraube 12 in die Bohrungen des Zahnrades 6 eingesetzt, und sodann wird eine Gewindebuchse 10 auf die Spannschraube aufgeschraubt und mit einer Mutter 11 gekontert.

Wie in der rechten Hälfte der Zeichnung gezeigt, ist das Zahnrad 6 über den Umfang mit mehreren, vorzugsweise drei abgestuften Bohrungen versehen. Die Rolle 7 ist mit entsprechenden Gewindebohrungen versehen, so daß das Zahnrad 6 und die Rolle 7 mit Schrauben 8 drehfest verbunden werden können. Diese von dem - Zahnrad 6 und der Rolle 7 gebildete Werkzeugeinheit wird auf dem zylindrischen Bereich der Werkstückspindel 1 angeordnet. Die Spannschrauben 12 werden sodann in die zugehörigen Gewindebohrungen 9 der Werkstückspindel 1 eingeschraubt, so daß das Zahnrad 6 an der Ringschulter der Werkstückspindel zur Anlage gelangt. Der an die Ringschulter angrenzende Abschnitt des zylindrischen Bereichs der Werkstückspindel 1 hat einen geringfügig vergrößerten Außendurchmesser, so daß sich mit dem Zahnrad 6 ein Preßsitz ergibt. Die aus Zahnrad 6 und Rolle 7 bestehende Werkzeugeinheit ist somit in konzentrischer Anordnung mit der Werkstückspindel 1 axial- und drehfest verbunden.

Wenn die Schleifschnecke 3 infolge Abnutzung abgerichtet werden muß, dann werden die Werkzeugspindel und die Werkstückspindel 1 relativ zueinander bewegt, um die Schleifschnecke 3 und das Zahnrad 6 unter einem geeigneten Kreuzungswinkel miteinander in Eingriff zu bringen. Die Flanken der Schleifschnecke 3 werden sodann in einem Tangential- oder Diagonalverfahren profiliert. Hierbei ist es lediglich notwendig, die technologischen Größen, wie Zustellung, Vorschub und Drehzahl der Schleifschnecke 3 auf die konkret vorliegende Abrichtaufgabe abzustimmen. Alle für das Abrichten der Schleifschnecke im Tangential- oder Diagonalverfahren erforderlichen Bewegungen können über die ohnehin vorhandenen Maschinenachsen ausgeführt werden.

Nach dem Profilieren der Flanken der Schleifschnecke 3 mit dem Zahnrad 6 erfolgt eine Relativbewegung der Werkstückspindel 1 und der Werkzeugspindel, um die Schleifschnecke 3 gegenüber der Rolle 7 anzuordnen. Genauer gesagt die Schleifschnecke 3 wird zum Anpassen des Kopfkreisdurchmessers mit der abrasiven Umfangsfläche der Rolle 7 in Eingriff gebracht. Das Profilieren der Flanken der Schleifschnecke und das entsprechende Anpassen des Kopfkreisdurchmessers erfolgt somit in einem Arbeitszyklus.

Mit einem standardisierten Satz von aus Zahnrad 6 und Rolle 7 bestehenden Abrichtwerkzeugen, die einen einheitlichen Innendurchmesser aufweisen, können unterschiedlich profilierte Schleifschnecken 3 abgerichtet werden.

Wenn das Zahnrad 6 infolge Abnutzung ausgetauscht werden muß, dann werden die Spannschrauben 12 aus den Gewindebohrungen 9 der Werkstückspindel 1 herausgeschraubt. Dies hat zur Folge, daß die durch die Mutter 11 mit der Spannschraube 12 drehfest verbundene Gewindebuchse 10 an der Rolle 7 zur Anlage gelangt. Wenn die Spannschraube 12 weiter aus der Gewindebohrung 9 herausgeschraubt wird, dann wird auf die Rolle 7 eine Axialkraft ausgeübt, die über die Schrauben 8 auf das Zahnrad 6 übertragen wird. Unter dieser Axialkraft wird das Zahnrad 6 von der Werkstückspindel 1 abgedrückt. Sobald das Zahnrad 6 gegenüber der Werkstückspindel 1 hinreichend weit axial verschoben ist, so daß der Preßsitz in einen Schiebesitz übergeht, kann die aus Zahnrad 6 und Rolle 7 bestehende Werkzeugeinheit von der Werkstückspindel 1 abgezogen werden.

### Bezugszeichenliste:

- 1: Werkstückspindel
- 2: Zahnrad
- 3: Schleifschnecke
- 4: Bohrungen
- 5: Ringflansch
- 6: Abrichtzahnrad
- 7: Abrichtrolle
- 8: Schrauben
- 9: Gewindebohrung
- 10: Gewindebuchse
- 11: Mutter
- 12: Spannschraube

## Patentansprüche

1. Abrichtwerkzeug zum Abrichten einer im wesentlichen zylindrischen Schleifschnecke, die auf der Werkzeugspindel einer zum kontinuierlichen Wälzschleifen im Tangential- oder Diagonalverfahren geeigneten Maschine angeordnet ist, **gekennzeichnet durch** ein im wesentlichen zylindrisches Zahnrad (6), das auf der beim Abrichten aktiven Oberfläche mit einem abrasiven Belag versehen ist, zum Profilieren der Flanken der Schleifschnecke (3), und eine im wesentlichen zylindrische Rolle (7), die an der Umfangsfläche mit einem abrasiven Belag versehen ist, zum Anpassen des Kopfkreisdurchmessers der Schleifschnecke, wobei das Zahnrad (6) und die Rolle (7) mit der Werkstückspindel (1) der Maschine axial- und drehfest verbindbar sind.

2. Abrichtwerkzeug nach Anspruch 1, **dadurch gekennzeichnet, daß** das Zahnrad (6) und die Rolle (7) miteinander drehfest verbunden sind und als Werkzeugeinheit mit der Werkstückspindel (1) axial- und drehfest verbindbar sind.

3. Abrichtwerkzeug nach Anspruch 2, **dadurch gekennzeichnet, daß** das Zahnrad (6) und die Rolle (7) einstückig ausgebildet sind.

## Claims

1. Dressing tool for dressing a substantially cylindrical grinding worm arranged on the tool spindle of a machine adapted for continuous generation grinding by the tangential or diagonal process, **characterized by** a substantially cylindrical toothed wheel (6) provided with an abrasive coating on the surface active in the dressing process for profiling the flanks of the grinding worm (3), and a substantially cylindrical roller (7) provided with an abrasive coating on its circumferential face for trimming the tip diameter of the grinding worm, the toothed wheel (6) and roller (7) being axially and rotationally fixedly connectable to the work spindle (1) of the machine.

2. Dressing tool according to Claim 1, **characterized in that** the toothed wheel (6) and roller (7) are rotationally fixedly connected to each other and are axially and rotationally fixedly connectable to the work spindle (1) as a single tool unit.

3. Dressing tool according to Claim 2, **characterized in that** the toothed wheel (6) and roller (7) are made in one piece.

## Revendications

1. Outil de dressage pour dresser une vis sans fin de meulage essentiellement cylindrique, qui est disposée sur la broche d'outil d'une machine convenant pour le meulage en génération continue selon le procédé tangentiel ou diagonal, **caractérisé par** une roue dentée (6) essentiellement cylindrique qui est pourvue d'un revêtement abrasif sur sa surface active lors du dressage, pour profiler les flancs de la vis sans fin (3) de meulage, et par un rouleau (7) essentiellement cylindrique qui est pourvu d'un revêtement abrasif sur sa surface circonférentielle, pour adapter le diamètre du cercle de tête de la vis sans fin de meulage, sachant que la roue dentée (6) et le rouleau (7) peuvent être reliés en solidarité de rotation et en fixité axiale à la broche porte-pièce (1) de la machine.

2. Outil de dressage selon la revendication 1, **caractérisé en ce que** la roue dentée (6) et le rouleau (7) sont mutuellement reliés en solidarité de rotation et peuvent être reliés en solidarité de rotation et en fixité axiale à la broche porte-pièce (1) en tant qu'ensemble d'outil.

3. Outil de dressage selon la revendication 2, **caractérisé en ce que** la roue dentée (6) et le rouleau (7) sont réalisés d'un seul tenant.
